(19) Europäisches Patentamt

European Patent Office

Office européen des brevets

(11) **EP 3 653 592 A1**

(12) **EUROPEAN PATENT APPLICATION**

(43) Date of publication:
**20.05.2020 Bulletin 2020/21**

(51) Int Cl.:
***C04B 40/00*** *(2006.01)*   ***C04B 28/02*** *(2006.01)*

(21) Application number: **19208369.9**

(22) Date of filing: **11.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.11.2018   JP 2018215196**
**09.08.2019   JP 2019147503**

(71) Applicant: **Shin-Etsu Chemical Co., Ltd.**
**Tokyo (JP)**

(72) Inventor: **YAMAKAWA, Tsutomu**
**Joetsu-shi,, Niigata (JP)**

(74) Representative: **Mewburn Ellis LLP**
**Aurora Building**
**Counterslip**
**Bristol BS1 6BX (GB)**

(54) **WATER-REDUCING COMPOSITION, HYDRAULIC COMPOSITION, AND METHOD FOR PRODUCING THE SAME**

(57)   A water-reducing composition including (A) a water reducing agent containing a polycarboxylic acid-based water reducing agent and a naphthalene-based water reducing agent, (B) water-soluble cellulose ether, (C) gums, and (D) a defoamer.

EP 3 653 592 A1

**Description**

TECHNICAL FIELD

The present invention relates to a water-reducing composition, a hydraulic composition, and a method for producing the same.

BACKGROUND

A hydraulic composition is a composition containing at least a hydraulic substance such as cement, aggregate such as a fine aggregate and/or a coarse aggregate, and water, and is therefore a combination of inorganic substances having different specific gravity, particle shape, and particle diameter. Therefore, it is a composition in which material separation is likely to occur. Thus, attempts have been made to improve the viscosity of the hydraulic composition by adding a water-soluble polymer as a thickener.

For example, water-soluble cellulose ethers are among the few nonionic water-soluble polymers that can be thickened even in a hydraulic composition under the severe conditions for a water-soluble polymer in that a pH of cement is 12 or higher which is strongly alkaline, and many calcium ions are present due to the components of the cement.

However, since the water-soluble cellulose ether is generally used in a powder form, there is a problem in that it is inferior in handling to other liquid admixtures, and lumps are formed at the time of addition or, in the case of adding trace amounts, it scatters so that it is difficult to add the desired amount

In order to solve these problems, a water-reducing composition (these are also referred to as one-pack type water-reducing agents) which is a premixed admixture of water-soluble cellulose ether, a defoamer, gum, and a water-reducing agent has been proposed (see for example JP-A 2016-056081 (Patent Document 1)).

Citation List

Patent Document 1: JP-A 2016-056081 (EP-A-2966049)

THE INVENTION

However, we note that in the composition of Patent Document 1, although it takes measures to improve the storage stability of the premixed water-reducing composition by using gums, the storage stability may be poor depending on the solid content concentration and the $Na^+$ ion concentration of the polycarboxylic acid-based water reducing agent, so that there is room for improvement.

The present invention has been made in view of the above circumstances, and an object thereof is to provide a water-reducing composition which contains polycarboxylic acid-based water reducing agent, water-soluble cellulose ether, gum, and defoamer, and has good or improved storage stability. A hydraulic composition using the same, and methods for producing and using the same, are further aspects.

As a result of intensive research to solve the above problems, the inventor of the present invention has found that by using a naphthalene-based water reducing agent in combination with a water-reducing composition which contains at least a polycarboxylic acid-based water reducing agent, water-soluble cellulose ether, gums, and a defoamer, the storage stability of the water-reducing composition can be improved even if high Na+ ion concentration is maintained, and the fluidity of a hydraulic composition can be maintained at a high level. With this, the present invention has been completed.

That is, the present invention provides a water-reducing composition, a hydraulic composition, and a method for producing the same.

1. A water-reducing composition, for addition as an admixture to a hydraulic composition, containing (A) a water reducing agent containing a polycarboxylic acid-based water reducing agent and a naphthalene-based water reducing agent, (B) water-soluble cellulose ether, (C) gums, and (D) a defoamer.

2. The water-reducing composition of 1, wherein a ratio $SC_{pc} : SC_{np}$ of a solid content weight ($SC_{pc}$) of the polycarboxylic acid-based water reducing agent to a solid content weight ($SC_{np}$) of the naphthalene-based water reducing agent is 1:99 to 80:20.

3. The water-reducing composition of 1 or 2, wherein a $Na^+$ ion concentration of the component (A) is 8,500 ppm or more.

4. The water-reducing composition of any one of 1 to 3, wherein the water-soluble cellulose ether is one or two or more kinds selected from the group consisting of alkyl cellulose, hydroxyalkyl cellulose, and hydroxyalkyl alkyl cellulose.

5. The water-reducing composition of any one of 1 to 4, wherein the gums are one or two or more kinds selected from the group consisting of diutan gum, welan gum, xanthan gum, and gellan gum.

6. A hydraulic composition including the water-reducing composition of any one of 1 to 5, a hydraulic substance, and water.

7. A method for producing a hydraulic composition including a step of mixing the water-reducing composition of any one of 1 to 5, a hydraulic substance, and water.

Further aspects are the use of the water-reducing composition as an admixture in the preparation of a hydraulic composition, a method of preparing the water-reducing composition by mixing together components (A) - (D) thereof, and a water-reducing composition defined as the product of that method of preparation.

ADVANTAGEOUS EFFECTS

We find that by using a polycarboxylic acid-based water reducing agent and a naphthalene-based water reducing agent in combination, the storage stability of the water-reducing composition can be improved, and that a bleeding suppression effect can be expected when used in a hydraulic composition. Furthermore, since addition of the naphthalene-based water reducing agent does not cause aggregation with a water-soluble cellulose ether, a desired water-reducing effect can be expected, and a fluid hydraulic composition can be obtained.

FURTHER EXPLANATIONS: OPTIONS AND PREFERENCES

WATER-REDUCING COMPOSITION

Hereinafter, the formulation of a water-reducing composition according to the present invention is described. Herein, numerical ranges of the form "A to B" include the numerical values at the ends, meaning A or more and B or less.

The water-reducing composition according to the present invention includes

(A) a water reducing agent containing a polycarboxylic acid-based water reducing agent and a naphthalene-based water reducing agent,
(B) water-soluble cellulose ether,
(C) gums, and
(D) a defoamer.

Herein the term water-reducing composition means an admixture for addition to a hydraulic composition in use, containing at least a water-reducing agent, a water-soluble cellulose ether, gums and a defoamer, also referred to a one-pack type water-reducing agent. It is a premixed admixture. Typically it consists of or consists essentially of the listed components. Alternatively stated, it does not include hydraulic substance such as cement, nor aggregate. This is all well-known to the skilled person as the meaning of a one-pack type water-reducing agent.

Component (A)

Component (A) is a water reducing agent containing a polycarboxylic acid-based water reducing agent and a naphthalene-based water reducing agent, and preferably consists of polycarboxylic acid-based water reducing agent and naphthalene-based water reducing agent. In this context, as is well known, water reducing agent means a chemical admixture that reduces the unit water amount necessary to obtain a predetermined slump flow of a hydraulic composition to which it is added (also sometimes called plasticizer or superplasticizer) and may be e.g. any of so-called high-performance water reducing agents, AE water reducing agents and high-performance AE water reducing agents, and is preferably any of these. As well known, water-reducing agents are typically provided in the form of a solution of an organic water-reducing compound.

Specific examples of the polycarboxylic acid-based water reducing agent include a polycarboxylic acid ether-based compound, a composite of a polycarboxylic acid ether-based compound and a crosslinked polymer, a composite of a polycarboxylic acid ether-based compound and an oriented polymer; a composite of a polycarboxylic acid ether-based compound and a highly modified polymer; a polyether carboxylic acid-based polymer compound, a maleic acid copolymer, a maleate ester copolymer, a maleic acid derivative copolymer, a carboxyl group-containing polyether-based compound, a polycarboxylic acid group-containing multi-element polymer having a terminal sulfone group, a polycarboxylic acid-based graft copolymer, and a polycarboxylic acid ether-based polymer.

A commercially available polycarboxylic acid-based water reducing agent can be used. These are well known. For example, Tuepole/Chupol HP-11 (produced by TAKEMOTO OIL & FAT Co., Ltd.), MasterGlenium SP8SV X2 (produced by BASF Japan Ltd.) and the like can be exemplified. The property is preferably liquid. Further, a commercially available polycarboxylic acid-based water reducing agent may be appropriately diluted with water as necessary.

Two or more kinds of the polycarboxylic acid-based water reducing agents may be used in combination.

Specific examples of the naphthalene-based water reducing agent include those containing naphthalene sulfonate or a derivative thereof as a main component. Again these are well known. A commercially available product can be used as the naphthalene-based water reducing agent, and examples thereof include MIGHTY 150 (produced by Kao Corporation). The property is preferably liquid. Further, a commercially available naphthalene-based water reducing agent may be appropriately diluted with water as necessary.

Two or more kinds of the naphthalene-based water reducing agents may be used in combination.

The solid content concentration in the mixture (that is the mixture (A), the water reducing agent) of the polycarboxylic acid-based water reducing agent and the naphthalene-based water reducing agent is preferably 10% by weight or more, more preferably 10% to 50% by weight, still more preferably 12.5% to 30% by weight, and particularly preferably 13% to 20% by weight from the viewpoint of the storage stability after one-pack composing (uniform dispersion). If the solid content concentration in the component (A) is less than 10% by weight or more than 50% by weight, the storage stability after one-pack composing (uniform dispersion) may be deteriorated.

For these purposes the solid content concentration of a water reducing agent can be measured as follows.

First, a predetermined amount (for example, about 5 g) of a water reducing agent is placed in a weighing bottle (for example, a bottle capacity of 16 ml), and the weight thereof, that is, the weight (g) of the water reducing agent before drying, is measured. Then, drying is performed with a dryer at 105°C until the weight becomes constant weight, and the weight (g) of the water reducing agent after drying is measured. The solid content concentration is calculated by the following calculation formula using the measured weight of the water reducing agent before and after drying (the same applies hereafter).

$$\text{Solid content concentration (\% by weight)} =$$
$$\{\text{weight (g) of water reducing agent after drying} /$$
$$\text{weight (g) of water reducing agent before drying}\} \times 100$$

The ratio (weight ratio; $SC_{pc} : SC_{np}$) of the solid content weight ($SC_{pc}$) of the polycarboxylic acid-based water reducing agent and the solid content weight ($SC_{np}$) of the naphthalene-based water reducing agent in component (A) is preferably 1:99 to 80:20, more preferably 5:95 to 70:30, and still more preferably 10:90 to 55:45 from the viewpoint of the storage stability after one-pack composing (uniform dispersion). If the ratio is outside the above range, the storage stability after one-pack composing (uniform dispersion) may be deteriorated.

The $Na^+$ ion concentration in the mixture of the polycarboxylic acid-based water reducing agent and the naphthalene-based water reducing agent (that is, in (A) the water reducing agent) is preferably 8,500 ppm or more, more preferably 9,000 to 30,000 ppm, still more preferably 9,500 to 25,000 ppm, and particularly preferably 10,000 to 20,000 ppm from the viewpoint of the storage stability after one-pack composing (uniform dispersion). If the $Na^+$ ion concentration in the component (A) is less than 8,500 ppm, the storage stability after one-pack composing (uniform dispersion) may sometimes be deteriorated.

The $Na^+$ ion concentration of the water reducing agent can be measured by an ion chromatography method (the same applies hereafter). Details are described in the Examples later.

In producing the water-reducing composition (admixture) of the present invention, the polycarboxylic acid-based water reducing agent and the naphthalene-based water reducing agent under the following conditions may be used.

That is, the solid content concentration of the polycarboxylic acid-based water reducing agent is preferably 10% to 25% by weight, more preferably 12% to 24.5% by weight, and still more preferably 13% to 20% by weight, from the viewpoint of economy or considering the amount needing to be added in the production of the hydraulic composition.

In addition, the $Na^+$ ion concentration of the polycarboxylic acid-based water reducing agent is preferably 8,500 ppm or more, more preferably 9,000 to 18,000 ppm, and still more preferably 9,000 to 16,000 ppm, and particularly preferably 9,000 to 12,000 ppm from the viewpoint of the storage stability after one-pack composing (uniform dispersion).

The water reduction rate of the polycarboxylic acid-based water reducing agent is preferably 18% or more, and more preferably 19% to 30%, from the viewpoint of economy or the amount added in the production of the hydraulic composition.

Herein, the water reduction rate of a water reducing agent can be obtained by calculation from the unit water amounts of the standard concrete and test concrete specified in JIS A6204 (the same applies hereafter).

The solid content concentration of the naphthalene-based water reducing agent is preferably 10% to 50% by weight, more preferably 10% to 40% by weight, and still more preferably 10% to 20% by weight, from the viewpoint of economy or considering the amount needing to be added in the production of the hydraulic composition.

In addition, the Na$^+$ ion concentration of the naphthalene-based water reducing agent is preferably 8,500 ppm or more, more preferably 9,000 to 40,000 ppm, still more preferably 10,000 to 35,000 ppm, and particularly preferably 10,000 to 20,000 ppm, from the viewpoint of the storage stability after one-pack composing (uniform dispersion).

The water reduction rate of the naphthalene-based water reducing agent is preferably 10% or more, and more preferably 12% to 30%, from the viewpoint of fluidity of the hydraulic composition.

Furthermore, the absolute value of a difference between the Na$^+$ ion concentration of the polycarboxylic acid-based water reducing agent and the Na$^+$ ion concentration of the naphthalene-based water reducing agent is preferably 1,000 ppm or more, more preferably is 1,500 to 30,000 ppm, still more preferably 1,750 to 25,000 ppm, and particularly preferably 2,000 to 10,000 ppm from the viewpoint of the storage stability after one-pack composition (uniform dispersion).

Further, from the viewpoint of the storage stability after one-pack composition (uniform dispersion), the Na$^+$ ion concentration of the naphthalene-based water reducing agent is preferably larger than the Na$^+$ ion concentration of the polycarboxylic acid-based water reducing agent.

In the water-reducing compositions described herein the amount of (A) the water reducing agent (total weight of polycarboxylic acid-based water reducing agent and naphthalene-based water reducing agent) can be used as a reference amount (for example, 100 parts by weight), and the water-soluble cellulose ether, gum, and defoamer are added to this water reducing agent at predetermined relative amounts.

Component (B)

The water-soluble cellulose ether is preferably nonionic, and examples thereof include alkyl cellulose such as methyl cellulose; hydroxyalkyl cellulose such as hydroxyethyl cellulose and hydroxypropyl cellulose; and hydroxyalkylalkyl cellulose such as hydroxypropyl methyl cellulose, hydroxyethyl methyl cellulose, and hydroxyethyl ethyl cellulose.

Among the above alkyl celluloses, in methyl celluloses the substitution degree (DS) of a methoxy group is preferably 1.0 to 2.2, and more preferably 1.2 to 2.0. The substitution degree (DS) of the alkoxy group in the alkyl cellulose can be obtained by converting a value that can be measured by a methyl cellulose substitution degree analysis method of the 17th revised Japanese pharmacopoeia.

Among the hydroxyalkyl celluloses, in the hydroxyethyl cellulose, the number of molar substitution (MS) of a hydroxyethoxy group is preferably 0.3 to 3.0, and more preferably 0.5 to 2.8, and in the hydroxypropyl cellulose, the number of molar substitution (MS) of a hydroxypropoxy group is preferably 0.1 to 3.3 and more preferably 0.3 to 3.0. The number of molar substitution (MS) of the hydroxyalkoxy group in the hydroxyalkyl cellulose can be obtained by converting a value that can be measured by a hydroxypropyl cellulose substitution degree analysis method of the 17th revised Japanese pharmacopoeia.

Among the hydroxyalkylalkyl celluloses described above, in the hydroxypropylmethyl celluloses the substitution degree (DS) of the methoxy group is preferably 1.0 to 2.2, and more preferably 1.3 to 1.9, and the number of molar substitution (MS) of the hydroxypropoxy group is preferably 0.1 to 0.6, and more preferably 0.1 to 0.5. In the hydroxyethylmethyl celluloses the substitution degree (DS) of the methoxy group is preferably 1.0 to 2.2 and more preferably 1.3 to 1.9, and the number of molar substitution (MS) of the hydroxyethoxy group is preferably 0.1 to 0.6 and more preferably 0.15 to 0.4. In the hydroxyethylethyl celluloses the substitution degree (DS) of the ethoxy group is preferably 1.0 to 2.2 and more preferably 1.2 to 2.0, and the number of molar substitution (MS) of the hydroxyethoxy group is preferably 0.05 to 0.6 and more preferably 0.1 to 0.5. The substitution degree of the alkoxy group and the number of molar substitution of the hydroxyalkoxy group in the hydroxyalkylalkyl cellulose can be obtained by converting a value that can be measured by a hydroxypropyl cellulose substitution degree analysis method of hypromellose (hydroxypropylmethyl cellulose) described in the 17th revised Japanese pharmacopoeia.

The DS of the alkoxy group in the alkyl cellulose, hydroxyalkyl cellulose, and hydroxyalkylalkyl cellulose represents the degree of substitution and refers to the average number of methoxy groups per anhydroglucose unit.

The MS of the hydroxyalkoxy group in the alkyl cellulose, hydroxyalkyl cellulose, and hydroxyalkylalkyl cellulose represents the number/degree of molar substitution, and means the average number of moles of hydroxyalkoxy groups per mole of anhydrous glucose.

As the water-soluble cellulose ether, the hydroxyalkylalkyl celluloses such as hydroxypropylmethyl cellulose and hydroxyethylmethyl cellulose are preferable among those exemplified above from the viewpoint of imparting material separation resistance in the hydraulic composition.

The viscosity of a 1% by weight aqueous solution of the selected water-soluble cellulose ether(s) at 20°C is preferably 30 to 30,000 mPa·s, more preferably 300 to 25,000 mPa·s, still more preferably 500 to 20,000 mPa·s, and particularly preferably 500 to 3,000 mPa·s, from the viewpoint of giving a predetermined viscosity to the hydraulic composition.

The viscosity of a 1% by weight aqueous solution of water-soluble cellulose ether at 20°C of can be measured under a measurement condition of 12 rpm using a B-type viscometer.

The addition amount of the water-soluble cellulose ether is preferably 0.1 to 5 parts by weight and more preferably 0.4 to 3 parts by weight, per total 100 parts by weight (that is, the component (A)) of the polycarboxylic acid-based water reducing agent and the naphthalene-based water reducing agent from the viewpoint of giving a predetermined viscosity to the hydraulic composition.

The water-soluble cellulose ethers may be used alone or two or more kinds thereof may be used in combination. Moreover, as the water-soluble cellulose ether, a commercially available one may be used, or one produced by a known method may be used.

Component (C)

Examples of gums include diutan gum, welan gum, xanthan gum and gellan gum.

Diutan gum is composed of D-glucose, D-glucuronic acid, D-glucose and L-rhamnose, and two L-rhamnoses.

Welan gum has a structure in which L-rhamnose or L-mannose side chain is bound to a main chain in which D-glucose, D-glucuronic acid, and L-rhamnose are bound at a ratio of 2:2:1.

Similar to cellulose, xanthan gum has a main chain composed of $\beta$-1,4-linked D-glucose, and a side chain composed of two mannose and one glucuronic acid.

Gellan gum is a heteropolysaccharide consisting of four sugars in which D-glucose, D-glucuronic acid, and L-rhamnose are bound at a ratio of 2:1:1 as a repeating unit.

By using gums, it is possible to improve the apparent viscosity of the water reducing agent, improve the dispersion state in the water-reducing composition of the water-soluble cellulose ether, and improve the storage stability after one-pack composing (uniform dispersion).

The addition amount of gum, from the viewpoint of improving the dispersion state in the water-reducing composition of the water-soluble cellulose ether and improving the storage stability after one-pack composing (dispersion), in the case of diutan gum, is preferably 0.005 to 2 parts by weight, more preferably 0.01 to 1 part by weight, and still more preferably 0.1 to 0.8 parts by weight per total 100 parts by weight of the polycarboxylic acid-based water reducing agent and the naphthalene-based water reducing agent (that is, the component (A)). In the cases of any of welan gum, xanthan gum, and gellan gum, it is preferably 0.01 to 20 parts by weight, more preferably 0.05 to 10 parts by weight, and still more preferably 0.1 to 8 parts by weight per total 100 parts by weight of the polycarboxylic acid-based water reducing agent and the naphthalene-based water reducing agent (that is, the component (A)).

The gums may be used alone, or two or more kinds thereof may be used in combination. Commercially available gums can be used.

Component (D)

Examples of the defoamer include an oxyalkylene-based defoamer, a silicone-based defoamer, an alcohol-based defoamer, a mineral oil-based defoamer, a fatty acid-based defoamer, and a fatty acid ester-based defoamer.

Specific examples of the oxyalkylene-based defoamer include polyoxyalkylenes such as a (poly)oxyethylene (poly)oxypropylene adduct; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, and an oxyethyleneoxypropylene adduct of higher alcohol with 8 or more carbon atoms or secondary alcohol with 12 to 14 carbon atoms; (poly)oxyalkylene (alkyl) aryl ethers such as polyoxypropylene phenyl ether and polyoxyethylene nonyl phenyl ether; acetylene ethers obtained by addition polymerization of alkylene oxide to acetylene alcohol such as 2,4,7,9-tetramethyl-5-decyne-4,7-diol and 2,5-dimethyl-3-hexyne-2,5-diol, 3-methyl-1-butyn-3-ol; (poly)oxyalkylene fatty acid esters such as diethylene glycol oleate, diethylene glycol laurate, ethylene glycol distearate, and polyoxyalkylene oleate; (poly)oxyalkylene sorbitan fatty acid esters such as polyoxyethylene sorbitan monolaurate and polyoxyethylene sorbitan trioleate; (poly)oxyalkylene alkyl (aryl) ether sulfate ester salts such as sodium polyoxypropylene methyl ether sulfate and sodium polyoxyethylene dodecylphenol ether sulfate; (poly)oxyalkylene alkyl phosphate esters such as (poly)oxyethylene stearyl phosphate; (poly)oxyalkylene alkylamines such as polyoxyethylene laurylamine; and polyoxyalkylene amide.

Specific examples of the silicone-based defoamer include dimethyl silicone oil, silicone paste, silicone emulsion, organically modified polysiloxane (polyorganosiloxane such as dimethylpolysiloxane), and fluorosilicone oil.

Specific examples of the alcohol-based defoamer include octyl alcohol, 2-ethylhexyl alcohol, hexadecyl alcohol, acetylene alcohol, and glycols.

Specific examples of the mineral oil-based defoamer include kerosene and liquid paraffin.

Specific examples of the fatty acid-based defoamer include oleic acid, stearic acid, and alkylene oxide adducts thereof.

Specific examples of the fatty acid ester-based defoamer include glycerin monoricinoleate, an alkenyl succinic acid derivative, sorbitol monolaurate, sorbitol trioleate, and natural wax.

Among these, oxyalkylene-based defoamers are preferable from the viewpoint of efficiently defoaming entrained air of water-soluble cellulose ether and gums and improving the storage stability after one-pack composing (uniform dispersion).

The addition amount of the defoamer is preferably 0.001 to 16 parts by weight and more preferably 0.002 to 10 parts by weight per total 100 parts by weight of the polycarboxylic acid-based water reducing agent and the naphthalene-based water reducing agent (that is, the component (A)), from the viewpoint of efficiently defoaming entrained air of water-soluble cellulose ether and gums and improving the storage stability after one-pack composing (uniform dispersion).

The defoamer may be used alone or two or more kinds thereof may be used in combination. A commercially available defoamer can be used.

According to the water-reducing compositions disclosed herein, we find that the storage stability is improved. For example, sedimentation volume after standing for 72 hours immediately after one-pack composing (uniform dispersion) becomes 65% by volume or more. In addition, the sedimentation volume after standing for 168 hours immediately after one-pack composing (uniform dispersion) of the water-reducing composition can be 50% by volume or more.

Here, sedimentation volume means a volume ratio (suspension maintenance ratio) of a suspension layer (water-reducing composition layer) to the whole liquid observed when a predetermined amount (for example, 100 ml) of the water-reducing composition immediately after one-pack composing (uniform dispersion) (immediately after mixing) is poured into a graduated cylinder having a plug with a predetermined outer diameter (for example, 32 mm), and then left standing for a certain time at room temperature (20 ± 3°C). The amount of the water-reducing composition immediately after one-pack composing (uniform dispersion) (immediately after mixing) and the size (outer diameter and height) of the graduated cylinder to be used are not particularly limited as long as the height (that is, a boundary position between the supernatant and the suspension layer in the entire liquid) of the suspension layer (water-reducing composition layer) in the entire liquid during the above observation can be clearly confirmed visually.

The water-reducing composition of the present invention can be produced by a step of obtaining a water-reducing composition by mixing a polycarboxylic acid-based water reducing agent, a naphthalene-based water reducing agent, water-soluble cellulose ether, gums, and a defoamer.

At this time, the order (that is, the order in which materials are added and mixed) of addition of the polycarboxylic acid-based water reducing agent, the naphthalene-based water reducing agent, the water-soluble cellulose ether, the gums, and the defoamer is not particularly limited.

Further, the polycarboxylic acid-based water reducing agent and the naphthalene-based water reducing agent may be added separately, or may be added after mixing in advance. In addition, the order of addition of the polycarboxylic acid-based water reducing agent and the naphthalene-based water reducing agent may be the same or either one may be added first. For example, in a state where a stirring bar of a stirrer described later is rotating, the polycarboxylic acid-based water reducing agent, the naphthalene-based water reducing agent, the water-soluble cellulose ether, the gum, and the defoamer may be added and mixed in any order, and alternatively, a water reducing agent mixture in which the polycarboxylic acid-based water reducing agent and the naphthalene-based water reducing agent have been mixed in advance, the water-soluble cellulose ether, the gum, and the defoamer may be added and mixed in any order. Furthermore, either the polycarboxylic acid-based water reducing agent or the naphthalene-based water reducing agent is added, then a mixture in which the water-soluble cellulose ether, the gums, and the defoamer are mixed in advance is added and mixed for a certain period of time (about 1 minute), and the remaining water reducing agent may be added and mixed at the end.

Furthermore, the gum may be added in either form of powder or aqueous solution.

The mixing method is not particularly limited, and can be performed using, for example, a stirrer.

The stirrer is a device provided with a stirring element or bar (rotating blade) that rotates at high speed and a container in which the above materials can be mixed by the rotation of the stirring bar, and examples thereof include a homomixer (HM-310, manufactured by AS ONE Corporation), a rotor-stator type mixer such as high speed homomixer (LZB14-HM-1, manufactured by CHUORIKA, CO., LTD.), a cylindrical wall swirl mixer such as a thin film swivel type high speed mixer (FILMIX, manufactured by PRIMIX PLUS Inc.), a homogenizer (PH91, manufactured by SMT Co., Ltd.), or a highspeed stirrer to which those principles are applied. Among them, the rotor-stator type mixer or the cylindrical wall swirling mixer is preferable.

Examples of the types of stirring bar (rotating blades) in the stirrer include a turbine-stator type, a thin film swirl type (PC wheel: a perforated cylindrical element rotated in close proximity to a cylindrical vessel wall), a disper type, and a perforated cage type, and from the viewpoint of the stirring efficiency and the storage stability of the water-reducing composition, the turbine-stator type and the thin-film swivel type (PC wheel) are preferable.

The peripheral speed of the stirring bar in the stirrer is preferably 7 to 30 m/s, and more preferably 7 to 15 m/s, from the viewpoint of efficient productivity of the water-reducing composition.

The peripheral speed of the stirring bar is the speed of the fastest part of the stirring bar (rotating blade) that rotates in the stirrer (that is, the outermost periphery of the stirring bar).

The peripheral speed v (m/s) of the stirring bar is obtained by the following formula from the diameter d (mm) of the stirring bar and the rotation speed n (rpm (number of rotations per minute)) of the stirring bar.

$$v = \pi \times d \times n/60{,}000$$

The mixing time (stirring time) is the time after all the materials of the water reducing agent, the water-soluble cellulose ether, the gums, and the defoamer are added and the target peripheral speed of the stirring bar is reached, or the time after all the materials of the water reducing agent, the water-soluble cellulose ether, the gums, and the defoamer have been added after the target peripheral speed of the stirring bar has been reached, and is not particularly limited. For example, it is preferably 30 seconds or longer, and more preferably 1 minute or longer, from the viewpoint of efficient productivity of the water-reducing composition. The upper limit of the mixing time is not particularly limited, and is preferably 60 minutes or shorter, and more preferably 10 minutes or shorter from the viewpoint of efficient productivity of the water-reducing composition.

HYDRAULIC COMPOSITION AND METHOD FOR PRODUCING THE SAME

The hydraulic composition according to the present invention is characterized by containing the water-reducing composition of the present invention described above, a hydraulic substance, and water.

Moreover, the manufacturing method of the hydraulic composition according to the present invention is characterized by including at least a step of mixing the water-reducing composition of the present invention described above with a hydraulic substance, and water.

Specific applications of the hydraulic composition include concrete, mortar, and cement paste.

The hydraulic composition for concrete is preferably one containing the water-reducing composition of the present invention, the hydraulic substance (cement), water, a fine aggregate (sand), and a coarse aggregate (gravel). Examples of the kinds thereof include ordinary concrete, medium fluidized concrete, highly fluidized concrete, underwater inseparable concrete, and sprayed concrete.

The hydraulic composition for mortar preferably contains the water-reducing composition of the present invention, and the hydraulic substance (cement), water, and the fine aggregate (sand). Examples of the kinds thereof include a tiled mortar, a repair mortar, and a self-leveling material.

The hydraulic composition for cement paste preferably contains the water-reducing composition of the present invention, the hydraulic substance (cement), and water. Examples thereof include a tile-based inorganic building material adhesive and a grout material to embed empty walls between parts.

Examples of the hydraulic substance include hydraulic cement such as ordinary Portland cement, high-early-strength Portland cement, moderate heat Portland cement, blast furnace cement, silica cement, fly ash cement, alumina cement, and ultra-high-early strong Portland cement.

The hydraulic substances may be used alone or two or more kinds thereof may be used in combination. In addition, a commercially available hydraulic substance can be used.

The content of the hydraulic substance (cement) is preferably 270 to 800 kg per 1 $m^3$ of concrete in a case where the hydraulic composition is used for concrete from the viewpoint of securing strength.

In a case where the hydraulic composition is used for a mortar, the content is preferably 300 to 1,000 kg per 1 $m^3$ of mortar.

In a case where the hydraulic composition is used for cement paste, the content is preferably 500 to 1,600 kg per 1 $m^3$ of cement paste.

The addition amount of the water-reducing composition of the present invention is preferably 0.1 to 5% by weight and more preferably 0.3% to 3% by weight per unit cement amount (kg/$m^3$) from the viewpoint of fluidity, material separation resistance, setting delay, and the like in the hydraulic composition.

Examples of water include tap water and seawater, and tap water is preferable from the viewpoint of preventing salt damage.

The water/cement ratio (W/C) in the hydraulic composition is preferably 30% to 75% by weight, more preferably 45% to 65% by weight, from the viewpoint of material separation in the hydraulic composition.

The hydraulic composition further includes an aggregate depending on the application thereof. Examples of the aggregate include a fine aggregate and a coarse aggregate.

As the fine aggregate, river sand, mountain sand, land sand, crushed sand and the like are preferable.

The sand cement ratio in the hydraulic composition is preferably 0.5 to 3.0 from the viewpoint of fluidity, preventing cracks, and cost of the hydraulic composition.

The particle size (maximum particle size) of the fine aggregate is preferably 5 mm or less.

The particle size distribution of the fine aggregate is preferably from 0.075 to 5 mm, more preferably from 0.075 to 2 mm, and still more preferably from 0.075 to 1 mm, from the viewpoint of the troweling workability of the mortar composition. The particle size distribution of the fine aggregate can be measured using a sieve having openings of 5 mm, 2.5 mm, 1.2 mm, 850 μm, 600 μm, 425 μm, 300 μm, 212 μm, 150 μm, 106 μm, 75 μm, and 53 μm.

In a case where the hydraulic composition is for concrete, the content of the fine aggregates is preferably 400 to 1,100 kg, more preferably 500 to 1,000 kg per 1 m³ of concrete, and in a case where the hydraulic composition is used for a mortar, the content is preferably 500 to 2,000 kg and more preferably 600 to 1,600 kg per lm³ of mortar.

As the coarse aggregate, river gravel, mountain gravel, land gravel, crushed stone, and the like are preferable.

The particle size (maximum particle size) of the coarse aggregate is larger than the particle size of the fine aggregate, and is preferably 40 mm or less and more preferably 25 mm or less.

In a case where the hydraulic composition is used for concrete, the content of the coarse aggregate is preferably 600 to 1,200 kg and more preferably 650 to 1,150 kg per 1m³ of concrete.

In a case where the hydraulic composition is used for concrete, the fine aggregate ratio (volume percentage) in the aggregate is preferably 30% to 55% by volume, more preferably 35% to 55% by volume, and more preferably 35% to 50% by volume, from the viewpoint of maintaining the fluidity or sufficient strength. The following expression is established:

$$\text{Fine aggregate ratio (volume\%)} =$$

$$\text{fine aggregate volume}/$$

$$(\text{fine aggregate volume} + \text{coarse aggregate volume}) \times 100$$

The aggregates may be used alone or two or more kinds thereof may be used in combination. Commercially available aggregate can be used.

An admixture may be added to the hydraulic composition as necessary in order to suppress heat generation during curing and to increase durability after curing. Examples of such admixture include blast furnace slag and fly ash.

In a case of adding the admixture, the content thereof is preferably more than 0% by weight and 70% by weight or less from the viewpoint of the initial strength development and durability of the hydraulic composition. The admixtures may be used alone or two or more kinds thereof may be used in combination. In addition, a commercially available admixture can be used.

In the hydraulic composition, an AE agent (air entraining agent) may be used in combination as necessary in order to secure a predetermined amount of air and obtain the durability of the hydraulic composition.

Examples of the AE agent include AE agents of an anionic surfactant, a cationic surfactant, a nonionic surfactant, an amphoteric surfactant, and a rosin surfactant.

Examples of the anionic surfactant include a carboxylic acid type, a sulfuric acid ester type, a sulfonic acid type, and a phosphoric acid ester type.

Examples of the cationic surfactant include an amine salt type, a primary amine salt type, a secondary amine salt type, a tertiary amine salt type, and a quaternary amine salt type.

Examples of the nonionic surfactant include an ester type, an ester and ether type, an ether type, and an alkanolamide type.

Examples of the amphoteric surfactant include an amino acid type and a sulfobetaine type.

Examples of the rosin surfactant include abietic acid, neoabietic acid, parastrinic acid, pimaric acid, isopimaric acid, and dehydroabietic acid.

The addition amount of the AE agent is preferably 0.0001 to 0.01% by weight per unit cement amount (kg/m³) from the viewpoint of the air amount of the hydraulic composition.

The AE agents may be used alone or two or more kinds thereof may be used in combination. A commercially available AE agent can be used.

In order to obtain the strength of the hydraulic composition, further defoamer may be added to the hydraulic composition as necessary. Examples of the further defoamer include those proposed for use in the water-reducing composition.

The addition amount of defoamer is preferably 1 to 50 parts by weight per 100 parts by weight of the water-soluble cellulose ether from the viewpoint of dispersibility.

In addition, in the hydraulic composition of the present invention, in order to manage the physical properties of the hydraulic composition (fresh concrete, fresh mortar, or fresh cement paste) immediately after kneading, a set acceleration agent such as calcium chloride, lithium chloride, and calcium formate or a setting retarder such as sodium citrate or sodium gluconate can be used as necessary. Furthermore, in order to prevent shrinkage cracking due to hardening and drying and cracking by a temperature stress due to heat of hydration reaction of cement, a drying shrinkage reducing agent and an Auin/hauyne or lime expansion material can be added in the hydraulic composition of the present invention as necessary.

The hydraulic composition described above can be produced by a usual method. For example, first, the water-reducing composition of the present invention, the hydraulic substance, and the aggregates (fine aggregate and/or coarse aggregate) and the defoamer as necessary are put into a mixer and air-kneaded. Thereafter, water is added and kneaded to obtain the hydraulic composition.

Moreover, the water-reducing composition and water may be mixed in advance to be added.

As described above, according to the method for producing the hydraulic composition of the present invention, bleeding is suppressed and thus a fluid hydraulic composition is obtained.

EXAMPLES

Hereinafter, the present invention is specifically described below with reference to Examples and Comparative Examples, but the present invention is not limited to the following Examples.

EXAMPLES 1 TO 10, COMPARATIVE EXAMPLES 1 AND 2

Production of water-reducing composition

Water reducing agents, water-soluble cellulose ether, gums, and a defoamer described below were weighed to be the addition amounts indicated in Table 1, and these materials were stirred and mixed as follows using a stirrer to produce a water-reducing composition.

Examples 1 to 8 and Comparative Examples 1 and 2

The stirring time in all of Examples 1 to 8 and Comparative Examples 1 and 2 was 2 minutes after all of the water reducing agent, the water-soluble cellulose ether, the gum, and the defoamer were added after having the stirring bar reach the target peripheral speed.

In addition, for the water reducing agent, a polycarboxylic acid-based water reducing agent and a naphthalene-based water reducing agent were mixed in advance and added as a mixture of the water reducing agents. The gums were added in the form of powder.

Example 9

In Example 9, after having the stirring bar reach the target peripheral speed, a mixture of the water-soluble cellulose ether, the gum, and the defoamer was added to the polycarboxylic acid-based water reducing agent, and after stirring for 1 minute, the naphthalene-based water reducing agent was added and stirred for another 1 minute.

The water-soluble cellulose ether, the gums, and the defoamer were added in a powder state.

Example 10

In Example 10, after having the stirring bar reach the target peripheral speed, a mixture of the water-soluble cellulose ether, the gums, and the defoamer was added to the naphthalene-based water reducing agent, and after stirring for 1 minute, the polycarboxylic acid-based water reducing agent was added and stirred for another 1 minute.

The water-soluble cellulose ether, the gums, and the defoamer were added in a powder state.

Materials used

(A) Water reducing agent

(A-1) Carboxylic acid-based water reducing agent
• Tuepole HP-11 (produced by TAKEMOTO OIL & FAT Co., Ltd.)

| | |
|---|---|
| Solid content concentration: | 24.3% by weight |
| $Na^+$ ion concentration: | 16,000ppm |
| Water reduction rate: | 19% |

(A-2) Carboxylic acid-based water reducing agent
• Substance obtained by diluting Tuepole HP-11 (produced by TAKEMOTO OIL & FAT Co., Ltd.) with water

|  |  |
|---|---|
| Solid content concentration: | 15.0% by weight |
| Na+ ion concentration: | 9,880 ppm |
| Water reduction rate: | 19% |

(A-3) Naphthalene-based water reducing agent
• MIGHTY 150 (produced by Kao Corporation)

|  |  |
|---|---|
| Solid content concentration: | 39.7% by weight |
| Na+ ion concentration: | 35,000 ppm |
| Water reduction rate: | 26% |

(A-4) Naphthalene-based water reducing agent
• Substance obtained by diluting MIGHTY 150 (produced by Kao Corporation) with water

|  |  |
|---|---|
| Solid content concentration: | 15.0% by weight |
| Na+ ion concentration: | 13,200 ppm |
| Water reduction rate: | 26% |

Measurement method of Na+ ion concentration

The Na+ ion concentration of the water reducing agent (the above carboxylic acid-based water reducing agent, the naphthalene-based water reducing agent, and a mixture thereof) was measured by the following method.
A water reducing agent sample used in the production of the water-reducing composition was diluted with pure water to 1/10,000 concentration, and filtered using a 0.2 $\mu$m filter (trade name, liquid chromatography disc (made by PTFE), manufactured by Thermo Fisher Scientific), and measured with an ion chromatograph DIONEX ICS-1600 (manufactured by Thermo Fisher Scientific) under the following measurement conditions.

|  Measurement conditions |  |
|---|---|
| • Guard column: | CG14 (manufactured by Thermo Fisher Scientific) |
| • Main column: | CS14 (manufactured by Thermo Fisher Scientific) |
| • Suppressor: | CERS-500-4mm (manufactured by Thermo Fisher Scientific) |
| • Column temperature: | 30°C |
| • Liquid volume: | 1 ml/min |
| • Injection volume: | 25 $\mu$m |
| • Eluent: | 10 mM-MSA (metasulfonic acid) |

The eluent was prepared by diluting 2 mol of metasulfonic acid with pure water to 10 mmol of concentration.

(B) Water-soluble cellulose ether

• Hydroxypropyl methylcellulose (HPMC)
  (DS; 1.40, MS; 0.20, viscosity of 1% by weight aqueous solution at 20°C; 2,200 mPa·s)

• Hydroxyethyl methylcellulose (HEMC)
  (DS; 1.50, MS; 0.20, viscosity of 1% by weight aqueous solution at 20°C; 2,070 mPa·s)

• Hydroxyethyl cellulose (HEC)
  (MS; 2.50, viscosity of 1% by weight aqueous solution at 20°C; 2,070 mPa·s)

(C) Gums

- Xanthan gum (XG)
  (KELTROL, produced by CP Kelco U.S. Inc.)

- Welan gum (WG)
  (KELCO-CRETE WG, produced by CP Kelco U.S. Inc.)

- Diutan gum (DG)
  (KELCO-CRETE DG-F, produced by CP Kelco U.S. Inc.)

(D) Defoamer

- Oxyalkylene (OA) defoamer
  (SN defoamer 14HP, produced by San Nopco LIMITED)

<u>Stirring conditions</u>

| | |
|---|---|
| • Stirrer: | Homomixer (HM-310, manufactured by AS ONE Corporation) |
| Blade type: | Turbine-stator type |
| Blade size (diameter): | 29 mm |
| Rotation speed: | 5,000 rpm |
| Peripheral speed: | 7.6 m/s |

The sedimentation volumes of the obtained water-reducing compositions were measured with the following method.

<u>Measurement of sedimentation volume</u>

Immediately after the above production, 100 ml of the water-reducing composition immediately after one-pack composing (uniform dispersion) was collected in a graduated cylinder (outer diameter 32 mm, capacity 100 ml, manufactured by IWAKI) having a plug and left (standing) at room temperature ($20 \pm 3°C$), and a boundary with a supernatant was visually observed immediately (after 0 hour), 24 hours, 72 hours, and 168 hours after collection. Based on the scale corresponding to the boundary, the volume ratio (suspension maintenance ratio) of the suspension layer (water-reducing composition layer) to the whole liquid was determined as the sedimentation volume. For example, in a case where the boundary with the supernatant is 0 mL, the sedimentation volume is 100% by volume, in a case where the boundary with the supernatant is 90 mL, the sedimentation volume is 90% by volume, and in a case where the boundary with the supernatant is 50 mL, the sedimentation volume is 50% by volume.

<u>PRODUCTION OF HYDRAULIC COMPOSITION (MORTAR)</u>

Next, using the water-reducing compositions produced as described above, mortars were produced as hydraulic compositions, as follows.

That is, a dry mortar was prepared by putting a predetermined amount of cement and fine aggregates into a 5 liter mortar mixer (C13 8A-48, manufactured by MARUTO Testing Machine Company.) defined in JIS R 5201 and performing dry blending for 1 minute. Subsequently, a mortar was produced by adding a mixture of the above water-reducing composition and a predetermined amount of water mixed in advance, and mixing the mixture for 3 minutes at a low speed (rotation speed: 140 rpm, revolution speed: 62 rpm) defined in JIS R 5201. The conditions at this time are as follows.

<u>Materials used</u>

(1) Water-reducing composition:
Water-reducing composition produced in each of the Examples and Comparative Examples

(2) Cement: Ordinary Portland cement produced by TAIHEIYO CEMENT CORPORATION

(3) Fine aggregate:
Mikawa silica sand Nos. 5 and 6
(produced by Mikawakeiseki Co., Ltd., crushed sand, maximum particle size 2 mm, particle size distribution 0.075 to 0.425 mm)

(4) Water: tap water

Mortar formulation

• Water-cement ratio (W/C): 45% by weight
• Sand-cement ratio: 1.0
• Addition amount of water-reducing composition: C $\times$ 0.50% by weight

Note that W represents a unit water amount (kg/m$^3$) and C represents a unit cement amount (kg/m$^3$).

Mortar temperature

The material temperature was adjusted so that mortar temperature at the end of kneading was 20 $\pm$ 3°C.
The obtained hydraulic composition (mortar) was subjected to the following table flow test, and the table flow value was measured.

Table flow test

The test was conducted according to JIS R 5201. Here, after placing the mortar on the table, an operation of giving 15 impacts (falling motion) to the defined table was not performed, and the table flow value (0 stroke flow) in the state without impact was measured. That is, the spread when the flow stopped after placing the mortar on the table was set as a table flow value (mortar flow value).
The results are indicated in Table 1.

Table 1

EP 3 653 592 A1

|  |  |  | Example |  |  |  |  |  |  |  |  |  | Comparative Example |  |
|---|---|---|---|---|---|---|---|---|---|---|---|---|---|---|
|  |  |  | 1 | 2 | 3 | 4 | 5 | 6 | 7 | 8 | 9 | 10 | 1 | 2 |
| Water reducing agent | Polycarboxylic acid-based | (A-1) | 68.75 |  |  |  |  |  |  |  | 68.75 | 68.75 |  |  |
|  |  | (A-2) |  | 38.60 | 28.78 | 19.08 | 19.08 | 19.08 | 19.08 | 19.08 |  |  | 100 |  |
|  | Naphthalene-based | (A-3) | 31.25 |  |  |  |  |  |  |  | 31.25 | 31.25 |  |  |
|  |  | (A-4) |  | 61.40 | 71.22 | 80.92 | 80.92 | 80.92 | 80.92 | 80.92 |  |  |  | 100 |
|  | Solid content weight ratio ($SC_{pc} : SC_{np}$) |  | 57.4:42.6 | 38.6:61.4 | 28871.2 | 19.1:80.9 | 19.1809 | 19.180.9 | 19.1:80.9 | 191:80.9 | 57.4:426 | 57.4:42.6 | 100:0 | 0:100 |
|  | Solid content concentration (% by weight) |  | 29.1 | 15.0 | 15.0 | 15.0 | 15.0 | 15.0 | 15.0 | 15.0 | 29.1 | 29.1 | 15.0 | 15.0 |
|  | Na$^-$ ion concentration difference (ppm) |  | 19,000 | 3,320 | 3,320 | 3,320 | 3,320 | 3,320 | 3,320 | 3,320 | 19,000 | 19,000 | - | - |
|  | Na ion concentration (ppm) |  | 21,700 | 11,872 | 12,204 | 12,536 | 12,536 | 12,536 | 12,536 | 12,536 | 21,700 | 21,700 | 9,880 | 13,200 |
| Water-soluble cellulose ether | HPMC |  | 0.562 | 0.552 | 0.549 | 0.546 |  |  | 0.546 | 0.546 | 0.562 | 0.562 | 0.572 | 0.540 |
|  | HEMC |  |  |  |  |  | 0.546 |  |  |  |  |  |  |  |
|  | HEC |  |  |  |  |  |  | 0.546 |  |  |  |  |  |  |
| Gum | XG |  | 0.169 | 0.166 | 0.165 | 0.164 | 0.164 | 0.164 |  |  | 0.169 | 0.169 | 0.172 | 0.162 |
|  | WG |  |  |  |  |  |  |  | 0.164 |  |  |  |  |  |
|  | DG |  |  |  |  |  |  |  |  | 0.164 |  |  |  |  |
| Defoamer | OA |  | 0.169 | 0.166 | 0.165 | 0.164 | 0.164 | 0.164 | 0.164 | 0.164 | 0.169 | 0.169 | 0.172 | 0.162 |
| Physical property evaluation of water reducing composition | Sedimentation volume (% by volume) | 0 h | 100 | 100 | 100 | 100 | 100 | 100 | 100 | 100 | 100 | 100 | 100 | 100 |
|  |  | 24 h | 100 | 90 | 100 | 100 | 100 | 100 | 100 | 100 | 100 | 100 | 50 | 100 |
|  |  | 72 h | 100 | 68 | 95 | 100 | 100 | 100 | 100 | 100 | 100 | 100 | 30 | 100 |
|  |  | 168 h | 100 | 50 | 90 | 100 | 100 | 100 | 100 | 100 | 100 | 100 | 15 | 100 |

(Parts by weight)

14

|  |  | Example | | | | | | | | | | Comparative Example | |
|---|---|---|---|---|---|---|---|---|---|---|---|---|---|
|  |  | | | | | | | | | | | | (Parts by weight) |
|  |  | 1 | 2 | 3 | 4 | 5 | 6 | 7 | 8 | 9 | 10 | 1 | 2 |
| Physical property evaluation of hydraulic composition | Table flow value (mm) | 261 | 180 | 168 | 167 | 153 | 137 | 146 | 155 | 259 | 262 | 293 | 131 |
| * In the table, "OA" represents oxyalkylene. | | | | | | | | | | | | | |

As a result of the above, regarding the storage stability of the present water-reducing compositions, as compared with the water-reducing composition containing only the polycarboxylic acid-based water reducing agent of Comparative Example 1, in the water-reducing compositions containing polycarboxylic acid-based water reducing agent and naphthalene-based water reducing agent of Examples 1 to 10, the storage stability up to 168 hours later was improved. In any of Examples 1 to 10, the storage stability of the water-reducing composition was improved while maintaining $Na^+$ ion concentration of 10,000 ppm or more. Furthermore, in Examples 5 to 8, a combination of water-soluble cellulose ethers and gums, one of which is different from that in Example 4, is used; however, it has been found that in either case, the water-reducing composition storage stability is improved.

Next, regarding the fluidity of the hydraulic composition (mortar) using the water-reducing composition, in the mortar using the water-reducing composition containing the polycarboxylic acid-based water reducing agent and the naphthalene-based water reducing agent of Examples 1 to 10, excellent fluidity is exhibited in all cases. On the other hand, in Comparative Example 2, owing to the mortar using the water-reducing composition containing only naphthalene-based water reducing agent, the result is inferior in fluidity. In particular, in Examples 2 to 4, although the proportion of the naphthalene-based water reducing agent is increased, the fluidity is excellent.

It is known that when naphthalene-based water reducing agent and water-soluble cellulose are used in combination, as in Comparative Example 2, both form a certain complex, resulting in a decrease in the fluidity of the hydraulic composition.

In contrast, in the present invention, by using the polycarboxylic acid-based water reducing agent and the naphthalene-based water reducing agent in combination as the water reducing agent, we find the formation of this complex is avoided, and the fluidity of the hydraulic composition is prevented from being reduced so that the storage stability of the water-reducing composition and the fluidity of the hydraulic composition are realized at a high level.

Notes

In respect of numerical ranges disclosed in the present description it will of course be understood that in the normal way the technical criterion for the upper limit is different from the technical criterion for the lower limit, i.e. the upper and lower limits are intrinsically distinct proposals.

For the avoidance of doubt it is confirmed that in the general description above, in the usual way the proposal of general preferences and options in respect of different features of the water-reducing composition, hydraulic composition, method and use constitutes the proposal of general combinations of those general preferences and options for the different features, insofar as they are combinable and compatible and are put forward in the same context.

The entire contents of Japanese Patent Applications Nos. 2018-215196 and 2019-147503, filed on November 16, 2018 and August 9, 2019 respectively, the priority of which is claimed herein, are hereby incorporated by reference as a precaution in case of error in translation or transcription.

Although the present invention has been described with reference to embodiments described above, the present invention is not limited to these embodiments, and can be changed within the range that can be conceived by those skilled in the art such as other embodiments, additions, changes, and deletions, and any embodiment is included in the scope of the present invention as long as the effects of the present invention are exhibited.

**Claims**

1.  A water-reducing composition for addition to a hydraulic composition and comprising a mixture of:

    (A) water reducing agent, comprising polycarboxylic acid-based water reducing agent and naphthalene-based water reducing agent;
    (B) water-soluble cellulose ether;
    (C) gum, and
    (D) defoamer.

2.  Water-reducing composition of claim 1 wherein a ratio $SC_{pc}$ : $SC_{np}$, being the ratio of the solid content weight ($SC_{pc}$) of the polycarboxylic acid-based water reducing agent to the solid content weight ($SC_{np}$) of the naphthalene-based water reducing agent, is from 1:99 to 80:20.

3.  Water-reducing composition of claim 2 wherein the ratio $SC_{pc}$ : $SC_{np}$ is from 5:95 to 70:30.

4.  Water-reducing composition of any one of the preceding claims wherein $Na^+$ ion concentration in component (A) is 8,500 ppm or more.

5. Water-reducing composition of any one of the preceding claims wherein the water-soluble cellulose ether is one or two or more kinds selected from alkyl celluloses, hydroxyalkyl celluloses and hydroxyalkylalkyl celluloses.

6. Water-reducing composition of claim 5 wherein the water-soluble cellulose ether is selected from hydroxyalkylalkyl celluloses.

7. Water-reducing composition of any one of the preceding claims wherein the gum is one or two or more kinds selected from diutan gum, welan gum, xanthan gum and gellan gum.

8. Water-reducing composition of any one of the preceding claims wherein the defoamer is selected from oxyalkylene-based defoamers, silicone-based defoamers, alcohol-based defoamers, mineral oil-based defoamers, fatty acid-based defoamers and fatty acid ester-based defoamers.

9. Water-reducing composition of claim 8 wherein the defoamer is selected from oxyalkylene-based defoamers.

10. Water-reducing composition of any one of the preceding claims which is a mixture consisting of components (A), (B), (C) and (D).

11. A hydraulic composition comprising a water-reducing composition of any one of claims 1 to 10, hydraulic substance, and water.

12. A method for producing a hydraulic composition comprising mixing a mixed water-reducing composition of any one of claims 1 to 10 with a hydraulic substance and water.

13. A method of making a water-reducing composition, comprising mixing together components (A), (B), (C) and (D) as defined in any one of claims 1 to 10.

Europäisches
Patentamt

European
Patent Office

Office européen
des brevets

## EUROPEAN SEARCH REPORT

**Application Number**

EP 19 20 8369

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 151290 A (TOKUYAMA MTECH CORP) 24 August 2015 (2015-08-24) * paragraphs [0017], [0018]; claim 1 * ----- | 1-13 | INV. C04B40/00 C04B28/02 |

TECHNICAL FIELDS
SEARCHED (IPC)

C04B

The present search report has been drawn up for all claims

| Place of search | Date of completion of the search | Examiner |
|---|---|---|
| Munich | 9 March 2020 | Roesky, Rainer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 20 8369

This annex lists the patent family members relating to the patent documents cited in  the above-mentioned European search report.
The members are as contained in the European Patent Office EDP file on
The European Patent Office is in no way liable for these particulars which are merely given for the purpose of information.

09-03-2020

| Patent document cited in search report | | Publication date | Patent family member(s) | | Publication date |
|---|---|---|---|---|---|
| JP 2015151290 | A | 24-08-2015 | JP | 6420043 B2 | 07-11-2018 |
| | | | JP | 2015151290 A | 24-08-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016056081 A
- EP 2966049 A
- JP 2018215196 A
- JP 2019147503 A